# EUROPEAN PATENT APPLICATION

(11) **EP 4 656 971 A1**
(43) Date of publication of application: **03.12.2025**
(21) Application number: 24861316.8
(22) Date of filing: 20.12.2024
(51) Int. Cl.: F25B 41/26, F16K 11/065, F25B 1/00

(54) **REFRIGERATION DEVICE**

(30) Priority: 14.03.2024 JP 2024040515
(71) Applicant: DAIKIN INDUSTRIES, LTD., Osaka-Shi, Osaka 530-0001 (JP)
(72) Inventor: NISHIGUCHI, Tomoya, Osaka 530-0001 (JP)
(74) Representative: Hoffmann Eitle
(86) International application number: PCT/JP2024/045145
(87) International publication number: WO 2025/191966

(57) **Abstract**

Time from a receipt of a heating operation command after a stop of a heating operation to a start of the heating operation is shortened. In an air conditioner (100), in a case where a refrigeration cycle operation immediately before being stopped is the heating operation or a defrost operation in which a refrigerant in a refrigerant circuit circulates in the same direction as in a cooling operation, the position of a valve body (52) after an operation stop is maintained at a second position or moved to the second position. As a result, the time from the operation stop state to the start of the heating operation can be shortened.

## Description

### TECHNICAL FIELD

The present disclosure relates to a refrigeration apparatus using a vapor compression refrigeration cycle.

### BACKGROUND ART

In a refrigeration apparatus such as an air conditioner for both cooling and heating, a circulation direction of a refrigerant is switched between a cooling operation and a heating operation via a four-way switching valve in a refrigerant circuit. For example, in a pilot solenoid valve type four-way switching valve disclosed in Patent Literature 1 (JP S55 -53825 Y), when a pilot electromagnetic valve is in an energized state, a valve body inside the four-way switching valve moves against a spring force to switch to a heating operation cycle, and when the pilot electromagnetic valve is in a non-energized state, the valve body is returned by the spring force to switch to a cooling operation cycle.

### SUMMARY OF THE INVENTION

### <Technical Problem>

However, in the above configuration, even in winter when the heating operation is performed, the valve body inside the four-way switching valve moves and stands by at a cooling operation cycle position when the operation of the air conditioner is stopped, and accordingly, it takes time from a receipt of a command of the heating operation to a start of the heating operation.

Therefore, there is a problem of shortening the time from the receipt of the heating operation command to the start of the heating operation.

### <Solution to Problem>

A refrigeration apparatus according to a first aspect is a refrigerant apparatus, in which a refrigerant circulates in a refrigerant circuit including a compressor, a four-way switching valve, a first heat exchanger, an expansion valve, and a second heat exchanger, and a refrigeration cycle operation is performed, the four-way switching valve including a flow path switching valve unit and a pilot valve unit. The flow path switching valve unit includes a valve body movable between a first position and a second position different from the first position. The pilot valve unit moves the valve body. The refrigeration cycle operation becomes a cooling operation in which the refrigerant discharged from the compressor is sent to the first heat exchanger via the four-way switching valve when the valve body is at the first position. The refrigeration cycle operation becomes a heating operation in which the refrigerant discharged from the compressor is sent to the second heat exchanger via the four-way switching valve when the valve body is at the second position. In a case where the refrigeration cycle operation immediately before being stopped is the heating operation or a defrost operation in which the refrigerant in the refrigerant circuit circulates in the same direction as in the cooling operation, the position of the valve body after an operation stop is maintained at the second position or moved to the second position.

In this refrigeration apparatus, there is a high possibility that the operation started from a stopped state in a midway of the heating operation or the defrost operation is the heating operation. Therefore, the valve body is set to the second position in advance before the start of the operation, and the flow path switching valve unit stands by in a flow path of the heating operation. Thus, the time until the start of the heating operation can be shortened.

A refrigeration apparatus according to a second aspect is the refrigeration apparatus according to the first aspect, in which the pilot valve unit includes a first pilot valve unit and a second pilot valve unit. When the valve body is at the second position, the first pilot valve unit is in a closed state and the second pilot valve unit is in an open state, or the first pilot valve unit and the second pilot valve unit are both in the closed state.

In this refrigeration apparatus, since the position of the valve body is maintained or the valve body is moved by a combination of opening and closing of the first pilot valve unit and opening and closing of the second pilot valve unit, the control is easy.

A refrigeration apparatus according to a third aspect is the refrigeration apparatus according to the second aspect, in which each of the first pilot valve unit and the second pilot valve unit is an electromagnetic on-off valve, and switches an on-off state of the on-off valve by switching an energized state.

In this refrigeration apparatus, since the open and closed states of the first pilot valve unit and the second pilot valve unit can be switched by non-energization or energization, the valve body can be operated more quickly than a motor-driven valve.

A refrigeration apparatus according to a fourth aspect is the refrigeration apparatus according to the third aspect, and further includes a control unit that controls the four-way switching valve. Each of the first pilot valve unit and the second pilot valve unit is in the closed state when not energized and in the open state when energized. In a case where the operation upon issuance of the stop command of the refrigeration cycle operation is the heating operation, the control unit brings the first pilot valve unit and the second pilot valve unit to the closed state while maintaining the position of the valve body at the second position.

In this refrigeration apparatus, bringing the first pilot valve unit and the second pilot valve unit into the closed state after the valve body moves means bringing the first pilot valve unit and the second pilot valve unit into the non-energized state, and power consumption is suppressed.

A refrigeration apparatus according to a fifth aspect is the refrigeration apparatus according to the fourth aspect, in which when the operation upon issuance of the stop command of the refrigeration cycle operation is the heating operation and the valve body is at the third position between the first position and the second position, the control unit moves the valve body to the second position.

In this refrigeration apparatus, there is a high possibility that the operation started from a stopped state in a midway of the heating operation is the heating operation. Therefore, the valve body is set to the second position in advance before the start of the operation, and the flow path switching valve unit stands by in a flow path of the heating operation. Thus, the time until the start of the heating operation can be shortened.

A refrigeration apparatus according to a sixth aspect is the refrigeration apparatus according to the fourth or fifth aspect, in which when setting the position of the valve body to the second position, the control unit brings the first pilot valve unit into the closed state and brings the second pilot valve unit into the open state.

In this refrigeration apparatus, since the valve body is moved by a combination of opening and closing of the first pilot valve unit and opening and closing of the second pilot valve unit, the control is easy.

A refrigeration apparatus according to a seventh aspect is the refrigeration apparatus according to the fourth aspect, in which in a case where the position of the valve body upon issuance of the stop command of the refrigeration cycle operation is the second position and the second pilot valve unit is in the open state, the control unit brings the second pilot valve unit into the closed state.

In this refrigeration apparatus, bringing the second pilot valve unit into the closed state means bringing the second pilot valve unit into the non-energized state, and the first pilot valve unit and the second pilot valve unit are in the non-energized state, and accordingly, power consumption is suppressed.

A refrigeration apparatus according to an eighth aspect is the refrigeration apparatus according to the fourth aspect, in which the control unit brings the first pilot valve unit and the second pilot valve unit to the closed state when a difference between a temperature of a heating target space and a set temperature falls within a predetermined range during the heating operation and the control unit stops the compressor.

In this refrigeration apparatus, bringing the first pilot valve unit and the second pilot valve unit into the closed state after the valve body moves means bringing the first pilot valve unit and the second pilot valve unit into the non-energized state, and power consumption can be suppressed.

A refrigeration apparatus according to a ninth aspect is the refrigeration apparatus according to any one of the second to eighth aspects, in which the flow path switching valve unit further includes a high-pressure refrigerant inflow portion, a low-pressure refrigerant outflow portion, a first pilot chamber, and a second pilot chamber. The high-pressure refrigerant inflow portion introduces a high-pressure refrigerant from a high-pressure side of the compressor. The low-pressure refrigerant outflow portion guides an inflowing low-pressure refrigerant toward a low-pressure side of the compressor. The first pilot chamber communicates with the first pilot valve unit. The second pilot chamber communicates with the second pilot valve unit. When the first pilot valve unit is in the open state and the second pilot valve unit is in the closed state, the first pilot chamber communicates with the low-pressure refrigerant outflow portion, is reduced in size, moves the valve body to the first position. When the first pilot valve unit is in the closed state and the second pilot valve unit is in the open state, the second pilot chamber communicates with the low-pressure refrigerant outflow portion, is reduced in size, moves the valve body to the second position.

### BRIEF DESCRIPTION OF THE DRAWINGS

FIG. 1 is a configuration diagram of an air conditioner according to an embodiment of the present invention.
FIG. 2 is a sectional view of a four-way switching valve in a first state.
FIG. 3 is a sectional view of the four-way switching valve in a midway of switching from the first state to a second state.
FIG. 4 is a sectional view of the four-way switching valve in the second state.
FIG. 5 is an enlarged sectional view of a valve main body.
FIG. 6 is a flowchart of stop position control of a valve body.
FIG. 7 is a flowchart of thermo-off control.

### DESCRIPTION OF EMBODIMENTS

### (1) Configuration of air conditioner 100

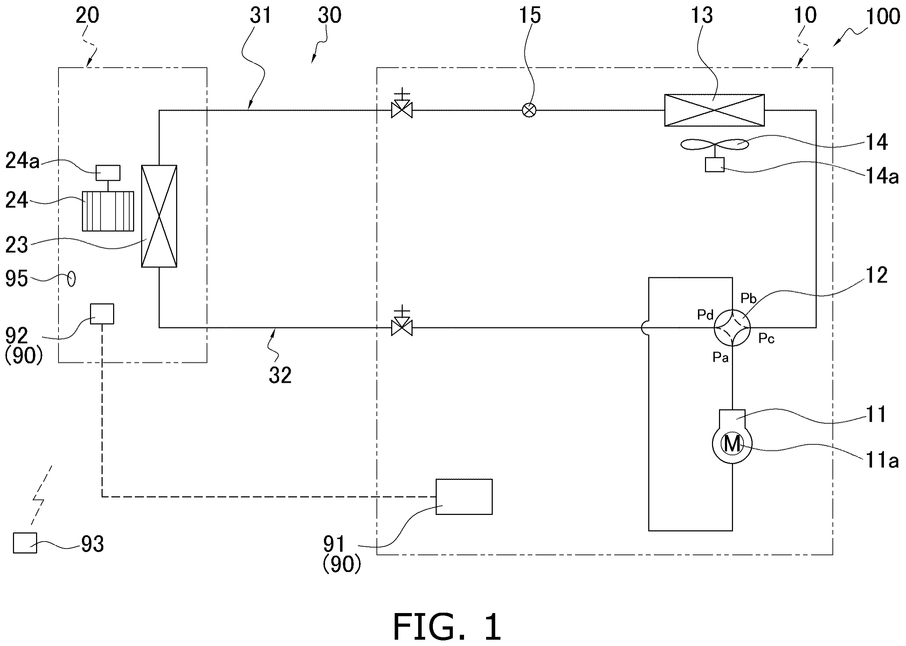

FIG. 1 is a configuration diagram of an air conditioner 100 according to an embodiment of the present invention. In FIG. 1, the air conditioner 100 is a refrigeration apparatus capable of cooling operation and heating operation, and includes an indoor unit 20, an outdoor unit 10, a liquid refrigerant connection pipe 31 and a gas refrigerant connection pipe 32 for connecting the outdoor unit 10 and the indoor unit 20. CO2 as a refrigerant is sealed in a refrigerant circuit 30 of the air conditioner 100. However, the refrigerant is not limited to CO2, and may be another refrigerant, for example, R32.

### (1-1) Indoor unit 20

The indoor unit 20 includes an indoor heat exchanger 23 and an indoor fan 24. The indoor unit 20 is provided with a remote control unit 93. The remote control unit 93 communicates with a control unit 90 built in the indoor unit 20 and the outdoor unit 10 to control the air conditioner 100 in response to a user's operation.

### (1-1-1) Indoor heat exchanger 23

The indoor heat exchanger 23 is a cross-fin type fin-and-tube heat exchanger including a heat transfer tube and a large number of fins. In the cooling operation, the indoor heat exchanger 23 functions as an evaporator for the refrigerant to cool indoor air, and in the heating operation, the indoor heat exchanger 23 functions as a condenser for the refrigerant to heat the indoor air.

The indoor heat exchanger 23 is not limited to a cross-fin type fin-and-tube heat exchanger, and may be another type of heat exchanger.

### (1-1-2) Indoor fan 24

The indoor fan 24 is a cross-flow fan. The indoor fan 24 is driven by an indoor fan motor 24a. However, the indoor fan 24 is not limited to a cross-flow fan, and may be, for example, a turbo fan.

The indoor fan 24 operates, the indoor unit 20 sucks in the indoor air, exchanges heat with the refrigerant in the indoor heat exchanger 23, and then supplies the air into the room. The indoor fan 24 can change an air volume supplied to the indoor heat exchanger 23 within a predetermined air volume range.

### (1-2) Outdoor unit 10

In FIG. 1, the outdoor unit 10 includes a compressor 11, a four-way switching valve 12, an outdoor heat exchanger 13, and an expansion valve 15. The outdoor unit 10 further includes an outdoor fan 14.

### (1-2-1) Compressor 11

The compressor 11 is a variable capacity compressor, and has a number of rotations controlled by an inverter. In the present embodiment, there is only one compressor 11, but the present disclosure is not limited thereto, and two or more compressors may be connected in parallel in accordance with the number of indoor units 20 connected or the like.

### (1-2-2) Four-way switching valve 12

The four-way switching valve 12 is a valve to switch a refrigerant flow direction. During the cooling operation, the four-way switching valve 12 connects a discharge side of the compressor 11 and a gas side of the outdoor heat exchanger 13, and connects a suction side of the compressor 11 and the gas refrigerant connection pipe 32. This state is a state of the four-way switching valve 12 indicated by a solid line in FIG. 1, and is referred to as a first state. As a result, the outdoor heat exchanger 13 functions as a condenser for the refrigerant, and the indoor heat exchanger 23 functions as an evaporator for the refrigerant.

During the heating operation, the four-way switching valve 12 connects the discharge side of the compressor 11 and the gas refrigerant connection pipe 32 and connects the suction side of the compressor 11 and the gas side of the outdoor heat exchanger 13. This state is a state of the four-way switching valve 12 indicated by a broken line in FIG. 1, and is referred to as a second state. As a result, the indoor heat exchanger 23 functions as a condenser for the refrigerant, and the outdoor heat exchanger 13 functions as an evaporator for the refrigerant.

### (1-2-3) Outdoor heat exchanger 13

The outdoor heat exchanger 13 is a cross-fin type fin-and-tube heat exchanger. The outdoor heat exchanger 13 functions as a condenser for the refrigerant during the cooling operation, and functions as an evaporator for the refrigerant during the heating operation. The outdoor heat exchanger 13 has a gas side connected to the four-way switching valve 12 and a liquid side connected to the expansion valve 15.

The outdoor heat exchanger 13 is not limited to a cross-fin type fin-and-tube heat exchanger, and may be another type of heat exchanger.

### (1-2-4) Expansion valve 15

The expansion valve 15 adjusts pressure, a flow rate, and the like of the refrigerant flowing inside the refrigerant circuit 30. The expansion valve 15 is disposed downstream of the outdoor heat exchanger 13 in a refrigerant flow direction in the refrigerant circuit 30 during the cooling operation.

### (1-2-5) Outdoor fan 14

The outdoor fan 14 blows sucked outdoor air to the outdoor heat exchanger 13 to exchange heat with the refrigerant. The outdoor fan 14 can vary the air volume when blowing air to the outdoor heat exchanger 13. The outdoor fan 14 is driven by an outdoor fan motor 14a.

### (1-3) Control unit 90

The control unit 90 controls an operating frequency of the compressor 11, a switching operation of the four-way switching valve 12, and an opening degree of the expansion valve 15 on the basis of a command signal from the remote control unit 93.

As shown in FIG. 1, the control unit 90 includes an indoor control unit 92 built in the indoor unit 20 and an outdoor control unit 91 built in the outdoor unit 10. Infrared signals are transmitted and received between the indoor control unit 92 and the remote control unit 93. The signals are transmitted and received between the indoor control unit 92 and the outdoor control unit 91 via wires.

### (2) Operation of air conditioner 100

In the air conditioner 100, a circulation cycle of the refrigerant can be switched to one of a circulation cycle during the cooling operation or a circulation cycle during the heating operation by the four-way switching valve 12.

### (2-1) Cooling operation

In the cooling operation, the four-way switching valve 12 is set to the first state (the state of the four-way switching valve 12 indicated by the solid line in FIG. 1). Then, the control unit 90 operates the compressor 11 in this state to achieves a vapor compression refrigeration cycle in which the outdoor heat exchanger 13 is a condenser and the indoor heat exchanger 23 is an evaporator.

A high-pressure refrigerant discharged from the compressor 11 exchanges heat with the outdoor air in the outdoor heat exchanger 13 to be condensed. The refrigerant that has exited the outdoor heat exchanger 13 is decompressed when passing through the expansion valve 15, and then exchanges heat with the indoor air in the indoor heat exchanger 23 to evaporate. At this time, the air is cooled by the indoor heat exchanger 23, and the cooled air is blown from the indoor unit 20 into the room via the indoor fan 24. The refrigerant that has exited the indoor heat exchanger 23 is sucked into the compressor 11 and compressed.

### (2-2) Heating operation

In the heating operation, the four-way switching valve 12 is set to the second state (the state of the four-way switching valve 12 indicated by a dotted line in FIG. 1). Then, the control unit 90 operates the compressor 11 in this state to achieves a vapor compression refrigeration cycle in which the outdoor heat exchanger 13 is an evaporator and the indoor heat exchanger 23 is a condenser.

The high-pressure refrigerant discharged from the compressor 11 exchanges heat with the indoor air in the indoor heat exchanger 23 to be condensed. At this time, the air is heated by the indoor heat exchanger 23, and the heated air is blown from the indoor unit 20 into the room via the indoor fan 24. The condensed refrigerant is decompressed when passing through the expansion valve 15, and thereafter exchanges heat with outdoor air by the outdoor heat exchanger 13 to evaporate. The refrigerant that has exited the outdoor heat exchanger 13 is sucked into the compressor 11 and compressed.

### (3) Configuration of four-way switching valve 12

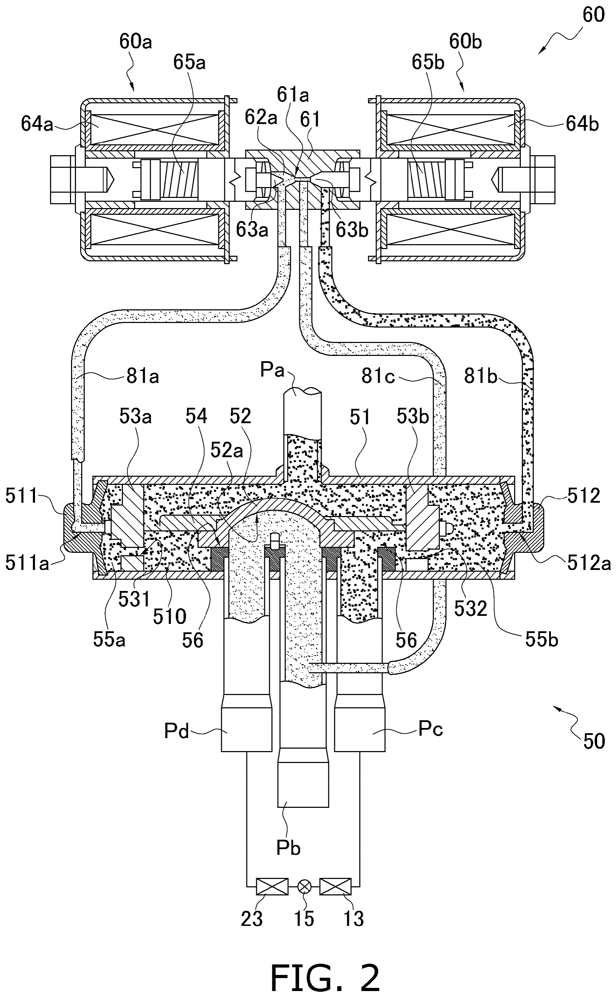

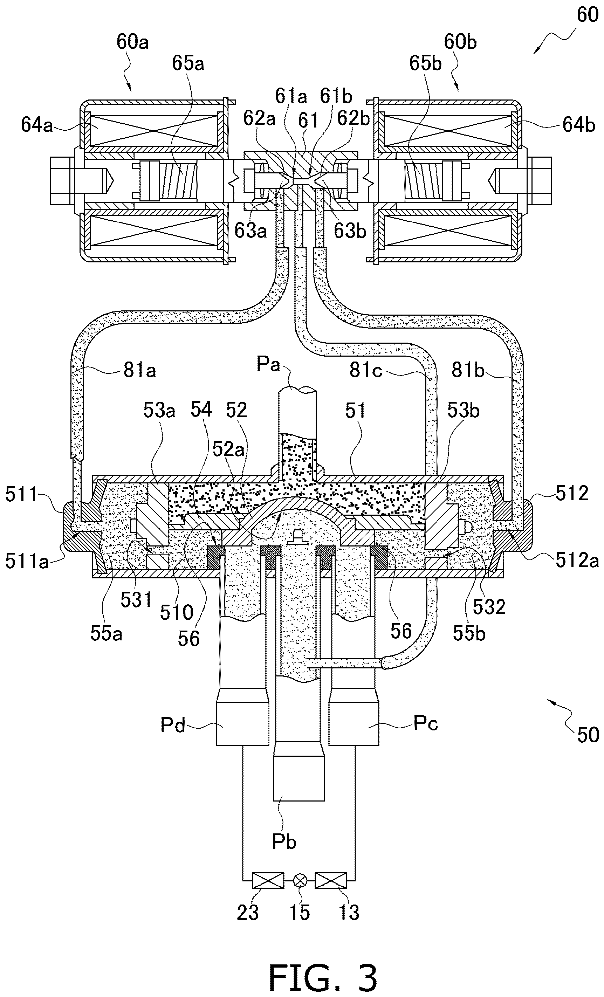

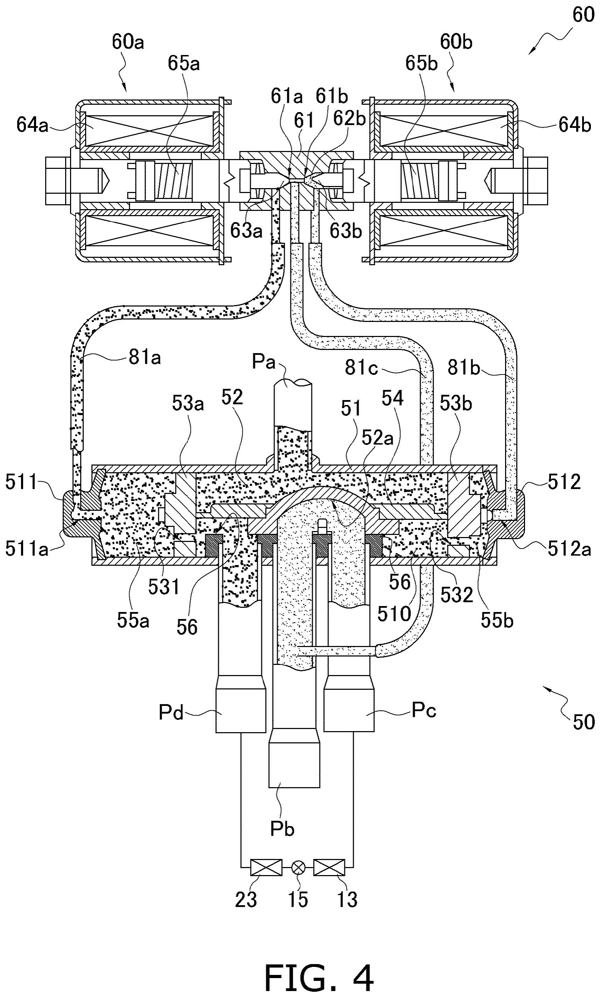

FIG. 2 is a sectional view of the four-way switching valve 12 in FIG. 1 in the first state indicated by the solid line. FIG. 3 is a sectional view in a midway of switching the four-way switching valve 12 in FIG. 1 from the first state indicated by the solid line to the second state indicated by the dotted line. FIG. 4 is a sectional view of the four-way switching valve 12 in FIG. 1 in the second state indicated by the dotted line. In FIGS. 2, 3, and 4, the four-way switching valve 12 includes a flow path switching valve unit 50, a pilot valve unit 60, and capillary tubes 81a to 81c connecting the flow path switching valve unit 50 and the pilot valve unit 60.

### (3-1) Flow path switching valve unit 50

The flow path switching valve unit 50 includes a cylinder 51, a valve body 52, a first piston 53a, a second piston 53b, a piston rod 54, a first pilot chamber 55a, and a second pilot chamber 55b.

### (3-1-1) Cylinder 51

The cylinder 51 is a metal cylindrical member having both ends closed by a first plug 511 and a second plug 512. In the front view of FIGS. 2, 3, and 4, the first plug 511 closes a left end of the cylinder 51, and the second plug 512 closes a right end of the cylinder 51. The first plug 511 is provided with a through hole 511a. The second plug 512 is provided with a through hole 512a.

A side wall of the cylinder 51 is provided with a first flow path Pa, a second flow path Pb, a third flow path Pc, and a fourth flow path Pd that communicate the inside of the cylinder 51 with the refrigerant circuit 30.

The first flow path Pa is provided at a center of the side wall of the cylinder 51 and is connected to a discharge pipe of the compressor 11. The second flow path Pb is provided at a position facing the first flow path Pa, and is connected to a suction pipe of the compressor 11.

The third flow path Pc and the fourth flow path Pd are arranged side by side in an axial direction of the cylinder 51 with the second flow path Pb interposed therebetween. The third flow path Pc is connected to the outdoor heat exchanger 13, and the fourth flow path Pd is connected to the indoor heat exchanger 23.

The inside of the cylinder 51 constitutes a cavity 510 communicating with the first flow path Pa, the second flow path Pb, the third flow path Pc, and the fourth flow path Pd. Opening ends of the second flow path Pb, the third flow path Pc, and the fourth flow path Pd near the cavity 510 form a valve seat 56 having a flat sliding surface.

### (3-1-2) Valve body 52

The valve body 52 slides in contact with the sliding surface of the valve seat 56. The valve body 52 has a length that covers two adjacent openings of the openings of the second flow path Pb, the third flow path Pc, and the fourth flow path Pd in a sliding direction. The valve body 52 has a concave portion 52a that allows the two openings to be covered to communicate with each other on a side facing the sliding surface of the valve seat 56.

### (3-1-2-1) First position of valve body 52

In FIG. 2, the valve body 52 is at a position allowing the openings of the second flow path Pb and the fourth flow path Pd to communicate with each other, and this position is referred to as a first position. When the valve body 52 is at the first position, a refrigeration cycle operation is the cooling operation, and the high-pressure gas refrigerant discharged from the compressor 11 flows into the cylinder 51 from the first flow path Pa, flows from the third flow path Pc to the outdoor heat exchanger 13 to be condensed, is decompressed by the expansion valve 15, then evaporates in the indoor heat exchanger 23, passes through the second flow path Pb from the fourth flow path Pd, and is sucked into the compressor 11.

### (3-1-2-2) Second position of valve body 52

In FIG. 4, the valve body 52 is at a position allowing the openings of the second flow path Pb and the third flow path Pc to communicate with each other, and this position is referred to as a second position. When the valve body 52 is at the second position, the refrigeration cycle operation is the heating operation, and the high-pressure gas refrigerant discharged from the compressor 11 flows into the cylinder 51 from the first flow path Pa, flows from the fourth flow path Pd to the indoor heat exchanger 23 to be condensed, is decompressed by the expansion valve 15, then evaporates in the outdoor heat exchanger 13, passes through the second flow path Pb from the third flow path Pc, and is sucked into the compressor 11.

### (3-1-2-3) Third position of valve body 52

In FIG. 3, the valve body 52 is located between the first position and the second position. This position is referred to as a third position. The third position is a position where the valve body 52 at the first position or the second position gradually moves and reaches.

Alternatively, the third position is a position where the valve body 52 stops without reaching either the first position or the second position in a case where the operation is switched and a power source is turned off while the valve body 52 is moving from the first position to the second position or from the second position to the first position.

### (3-1-3) First piston 53a, second piston 53b, and piston rod 54

In the cavity 510 of the cylinder 51, the first piston 53a and the second piston 53b connected by the piston rod 54 are slidably disposed.

The first piston 53a is located between the first plug 511 and the fourth flow path Pd in the front view of FIGS. 2, 3, and 4. The first piston 53a has a small hole 531 penetrating in the axial direction.

The second piston 53b is located between the second plug 512 and the third flow path Pc in the front view of FIGS. 2, 3, and 4. The second piston 53b has a small hole 532 penetrating in the axial direction.

The piston rod 54 holds the valve body 52 and moves together with the first piston 53a and the second piston 53b.

### (3-1-4) First pilot chamber 55a and second pilot chamber 55b

The first pilot chamber 55a is a space sandwiched between the first plug 511 and the first piston 53a. The second pilot chamber 55b is a space sandwiched between the second plug 512 and the second piston 53b.

A part of the high-pressure refrigerant flowing from the first flow path Pa flows into the first pilot chamber 55a through the small hole 531 of the first piston 53a and flows into the second pilot chamber 55b through the small hole 532 of the second piston 53b.

When there is a difference in pressure between the first pilot chamber 55a and the second pilot chamber 55b, the first piston 53a, the second piston 53b, the piston rod 54, and the valve body 52 move.

For example, in FIG. 2, since the pressure of the first pilot chamber 55a is smaller than the pressure of the second pilot chamber 55b, the first piston 53a, the second piston 53b, the piston rod 54, and the valve body 52 move to the left side in the front view of FIG. 2, and the position of the valve body 52 at that time is the first position.

In FIG. 4, since the pressure in the first pilot chamber 55a is larger than the pressure in the second pilot chamber 55b, the first piston 53a, the second piston 53b, the piston rod 54, and the valve body 52 move to the right side in the front view in FIG. 4, and the position of the valve body 52 at that time is the second position.

### (3-2) Pilot valve unit 60

The pilot valve unit 60 includes a first pilot valve unit 60a and a second pilot valve unit 60b.

### (3-2-1) First pilot valve unit 60a

The first pilot valve unit 60a includes a valve main body 61, a first valve seat 61a, a first valve chamber 62a, a first plunger 63a, a first solenoid 64a, and a first coil spring 65a.

The valve main body 61 is shared with the second pilot valve unit 60b. The first valve seat 61a is formed in the valve main body 61. The first valve chamber 62a is a space where the first plunger 63a moves, and communicates with an opening of the first valve seat 61a.

The first plunger 63a moves in the first valve chamber 62a to open and close the opening of the first valve seat 61a. When the first solenoid 64a is energized, the first solenoid 64a generates an electromagnetic force to move the first plunger 63a in a direction away from the opening of the first valve seat 61a. The first coil spring 65a constantly pushes the first plunger 63a in such a direction as to close the opening of the first valve seat 61a.

Since the electromagnetic force by the first solenoid 64a is larger than the force by which the first coil spring 65a pushes the first plunger 63a, when the first solenoid 64a is energized, the opening of the first valve seat 61a opens. When the first solenoid 64a is not energized, the first coil spring 65a pushes the first plunger 63a to close the opening of the first valve seat 61a.

### (3-2-2) Second pilot valve unit 60b

The second pilot valve unit 60b includes the valve main body 61, a second valve seat 61b, a second valve chamber 62b, a second plunger 63b, a second solenoid 64b, and a second coil spring 65b.

The valve main body 61 is shared with the first pilot valve unit 60a. The second valve seat 61b is formed in the valve main body 61. The second valve chamber 62b is a space where the second plunger 63b moves, and communicates with an opening of the second valve seat 61b.

The second plunger 63b moves in the second valve chamber 62b to open and close the opening of the second valve seat 61b. When the second solenoid 64b is energized, the second solenoid 64b generates an electromagnetic force to move the second plunger 63b in a direction away from the opening of the second valve seat 61b. The second coil spring 65b constantly pushes the second plunger 63b in such a direction as to close the opening of the second valve seat 61b.

Since the electromagnetic force by the second solenoid 64b is larger than the force by which the second coil spring 65b pushes the second plunger 63b, when the second solenoid 64b is energized, the opening of the second valve seat 61b opens. When the second solenoid 64b is not energized, the second coil spring 65b pushes the second plunger 63b to close the opening of the second valve seat 61b.

### (3-2-3) Configuration of valve main body 61

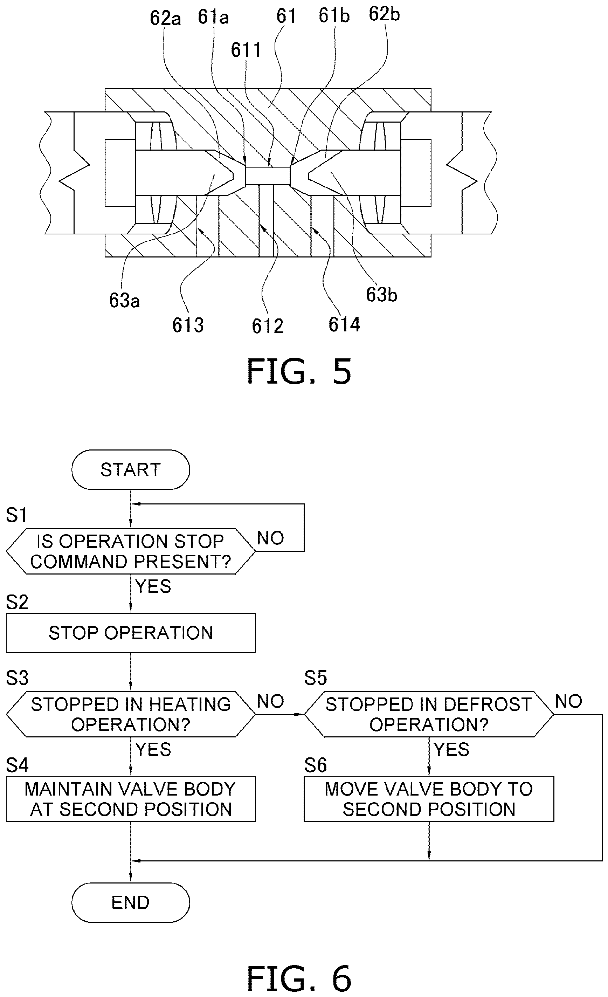

FIG. 5 is an enlarged sectional view of the valve main body 61. In FIG. 5, the opening of the first valve seat 61a and the opening of the second valve seat 61b formed in the valve main body 61 communicate with each other through a first communication hole 611. The valve main body 61 is provided with a second communication hole 612, a third communication hole 613, and a fourth communication hole 614.

The second communication hole 612 communicates with the first communication hole 611. As shown in FIGS. 2, 3, and 4, the second communication hole 612 is linked to the second flow path Pb of the flow path switching valve unit 50 via the capillary tube 81c.

The third communication hole 613 communicates with the first valve chamber 62a. As shown in FIGS. 2, 3, and 4, the third communication hole 613 is linked to the first pilot chamber 55a of the flow path switching valve unit 50 via the capillary tube 81a.

The fourth communication hole 614 communicates with the second valve chamber 62b. As shown in FIGS. 2, 3, and 4, the fourth communication hole 614 is linked to the second pilot chamber 55b of the flow path switching valve unit 50 via the capillary tube 81b.

### (4) Operation of four-way switching valve 12

The four-way switching valve 12 switches the position of the valve body 52 of the flow path switching valve unit 50 to the first position or the second position by switching opening and closing of the first pilot valve unit 60a and opening and closing of the second pilot valve unit 60b.

Hereinafter, a description will be given on the premise that when the first pilot valve unit 60a is in an open state by energization, the second pilot valve unit 60b is in a closed state by non-energization, and when the first pilot valve unit 60a is in the closed state by non-energization, the second pilot valve unit 60b is in the open state by energization.

### (4-1) Case where first pilot valve unit 60a is open and second pilot valve unit is closed

In FIGS. 2 and 5, when the first solenoid 64a is energized, the first plunger 63a is separated from the opening of the first valve seat 61a against a spring force of the first coil spring 65a by the electromagnetic force of the first solenoid 64a. Therefore, the opening of the first valve seat 61a is opened, the first valve chamber 62a communicates with the third communication hole 613, the refrigerant flows from the first pilot chamber 55a of the flow path switching valve unit 50 to the second flow path Pb via the capillary tubes 81a and 81c, and the first pilot chamber 55a shifts to low pressure.

On the other hand, since the second solenoid 64b is not energized, the second plunger 63b is pushed by the second coil spring 65b in such a direction as to close the second valve seat 61b. Therefore, since the second plunger 63b blocks the communication between the second valve chamber 62b and the fourth communication hole 614, the refrigerant does not flow from the second pilot chamber 55b of the flow path switching valve unit 50 to the second flow path Pb, and the second pilot chamber 55b maintains high pressure.

As a result, the first piston 53a, the second piston 53b, the piston rod 54, and the valve body 52 move in such a direction as to reduce the space of the first pilot chamber 55a, and the valve body 52 reaches the first position. At this time, the first flow path Pa and the third flow path Pc communicate with each other, the high-pressure gas refrigerant from the compressor 11 flows to the outdoor heat exchanger 13, and the second flow path Pb and the fourth flow path Pd communicate with each other, and a low-pressure refrigerant from the indoor heat exchanger 23 is sucked into the compressor 11.

### (4-2) Case where first pilot valve unit 60a is closed and second pilot valve unit is open

In FIGS. 4 and 5, when the second solenoid 64b is energized, the second plunger 63b is separated from the opening of the second valve seat 61b against a spring force of the second coil spring 65b by the electromagnetic force of the second solenoid 64b. Therefore, the opening of the second valve seat 61b is opened, the second valve chamber 62b communicates with the fourth communication hole 614, the refrigerant flows from the second pilot chamber 55b of the flow path switching valve unit 50 to the second flow path Pb via the capillary tubes 81b and 81c, and the second pilot chamber 55b shifts to low pressure.

On the other hand, since the first solenoid 64a is not energized, the first plunger 63a is pushed by the first coil spring 65a in such a direction as to close the first valve seat 61a. Therefore, since the first plunger 63a blocks the communication between the first valve chamber 62a and the third communication hole 613, the refrigerant does not flow from the first pilot chamber 55a of the flow path switching valve unit 50 to the second flow path Pb, and the first pilot chamber 55a maintains high pressure.

As a result, the first piston 53a, the second piston 53b, the piston rod 54, and the valve body 52 move in such a direction as to reduce the space of the second pilot chamber 55b, and the valve body 52 reaches the second position. At this time, the first flow path Pa and the fourth flow path Pd communicate with each other, and the high-pressure gas refrigerant from the compressor 11 flows to the indoor heat exchanger 23, the second flow path Pb and the third flow path Pc communicate with each other, and a low-pressure refrigerant from the outdoor heat exchanger 13 is sucked into the compressor 11.

### (5) Stop position control of valve body 52 in four-way switching valve 12

In the four-way switching valve described in Patent Literature 1 cited in the background art, when the pilot electromagnetic valve is in an energized state, the valve body moves against the spring force to switch to a heating operation cycle, and when the pilot electromagnetic valve is in a non-energized state, the valve body is returned by the spring force to switch to a cooling operation cycle.

Therefore, even in winter when the heating operation is performed, the valve body inside the four-way switching valve moves and stands by at a cooling operation cycle position when the operation of the air conditioner is stopped, and accordingly, it takes time from a receipt of a command of the heating operation to a start of the heating operation.

In the air conditioner 100 according to the present embodiment, in a case where the refrigeration cycle operation immediately before being stopped is the heating operation or a defrost operation in which the refrigerant in the refrigerant circuit circulates in the same direction as in the cooling operation, the position of the valve body 52 after the operation stop is maintained at the second position or moved to the second position to shorten the time from the receipt of the command of the heating operation to the start of the heating operation.

Here, "the refrigeration cycle operation immediately before being stopped" means immediately before an operation stop command is received. "Stop operation" means a state in which at least the compressor 11 is stopped.

FIG. 6 is a flowchart of stop position control of the valve body 52. Hereinafter, the stop position control of the valve body 52 will be described with reference to the drawings.

### (Step S1)

In step S1, the control unit 90 determines the presence or absence of the operation stop command of the air conditioner 100, and proceeds to step S2 when the operation stop command is present.

### (Step S2)

In step S2, the control unit 90 stops the air conditioner 100 and proceeds to step S3.

### (Step S3)

In step S3, the control unit 90 determines whether the air conditioner 100 has stopped in the heating operation. When determining that the air conditioner 100 has stopped in the heating operation, the control unit 90 proceeds to step S4. When determining that the air conditioner 100 has stopped not in the heating operation, the control unit 90 proceeds to step S5.

### (Step S4)

In step S4, the control unit 90 maintains the valve body 52 of the four-way switching valve 12 at the second position. In a case where the air conditioner 100 is stopped in the heating operation, the valve body 52 of the four-way switching valve 12 is at the second position. Therefore, maintaining the position of the valve body 52 at the second position eliminates the need for the operation of moving the position of the valve body 52 next time the heating operation starts, and the time from the receipt of the command of the heating operation to the start of the heating operation is shortened.

The processing of "maintaining the position of the valve body 52 at the second position" in step S4 is specifically processing of "closing the first pilot valve unit 60a, opening the second pilot valve unit 60b, or closing both the first pilot valve unit 60a and the second pilot valve unit 60b". As a result, the valve body 52 is set and maintained at the second position.

Furthermore, the processing of "closing the first pilot valve unit 60a, opening the second pilot valve unit 60b, or closing both the first pilot valve unit 60a and the second pilot valve unit 60b" is specifically processing of "not energizing the first pilot valve unit 60a but energizing the second pilot valve unit 60b, or not energizing the first pilot valve unit 60a nor the second pilot valve unit 60b". For convenience of description, the former is referred to as processing A, and the latter is referred to as processing B.

As in the processing A, in a case where the first pilot valve unit 60a is not energized but the second pilot valve unit 60b is energized, no electromagnetic force is generated in the first solenoid 64a, and the first valve seat 61a is closed by the first plunger 63a. On the other hand, the second solenoid 64b is energized, the second plunger 63b is separated from the second valve seat 61b by the electromagnetic force, and the second pilot chamber 55b of the flow path switching valve unit 50 communicates with the second flow path Pb. As a result, the second pilot chamber 55b is reduced in size, and the valve body 52 moves to the second position.

An advantage of the processing A is that, for example, in a case where the operation is stopped at a timing when the defrost operation is switched to the heating operation and the valve body 52 is stopped between the first position and the second position, the valve body 52 is reliably moved to the second position.

On the other hand, in a case where the first pilot valve unit 60a and the second pilot valve unit 60b are not energized as in the processing B, no electromagnetic force is generated in the first solenoid 64a and the second solenoid 64b, the first valve seat 61a is closed by the first plunger 63a, and the second valve seat 61b is closed by the second plunger 63b. As a result, since a pressure difference between the first pilot chamber 55a and the second pilot chamber 55b of the flow path switching valve unit 50 is maintained, the position of the valve body 52 is also maintained at the second position.

In the present embodiment, when a stop command is issued during the heating operation, the valve body 52 is at the second position, and the second pilot valve unit 60b is in the open state. Since energization to maintain the open state of the second pilot valve unit 60b even after the operation is stopped would wastefully consume power, the processing B of not energizing the second pilot valve unit 60b after the operation is stopped is reasonable. It is therefore desirable to perform the processing B after performing the processing A.

### (Step S5)

In step S5, the control unit 90 determines whether the air conditioner 100 has stopped in the defrost operation. When determining that the air conditioner 100 has stopped in the defrost operation, the control unit 90 proceeds to step S6.

When the control unit 90 determines that the air conditioner 100 is not stopped in the defrost operation, the operation is neither the heating operation nor the defrost operation. Therefore, the control unit 90 determines that the air conditioner is not subject to the stop position control of the valve body 52, and ends the control.

### (Step S6)

In step S6, the control unit 90 moves the valve body 52 of the four-way switching valve 12 to the second position. In a case where the air conditioner 100 is stopped in the defrost operation, the valve body 52 of the four-way switching valve 12 is at the first position. Therefore, moving the position of the valve body 52 from the first position to the second position eliminates the need for the operation of moving the position of the valve body 52 next time the heating operation starts, and the time from the receipt of the command of the heating operation to the start of the heating operation is shortened.

The processing of "moving the position of the valve body 52 to the second position" in step S6 is specifically processing of "closing the first pilot valve unit 60a and opening the second pilot valve unit 60b". As a result, the valve body 52 moves to the second position.

Furthermore, the processing of "closing the first pilot valve unit 60a and opening the second pilot valve unit 60b" is specifically processing of "not energizing the first pilot valve unit 60a, but energizing the second pilot valve unit 60b". In this case, no electromagnetic force is generated in the first solenoid 64a, and the first valve seat 61a is closed by the first plunger 63a.

On the other hand, the second solenoid 64b is energized, the second plunger 63b is separated from the second valve seat 61b by the electromagnetic force, and the second pilot chamber 55b of the flow path switching valve unit 50 communicates with the second flow path Pb. As a result, the second pilot chamber 55b is reduced in size, and the valve body 52 moves to the second position.

There is a high possibility that the operation started from a stopped state in a midway of the heating operation or the defrost operation is the heating operation. Therefore, the valve body 52 is set to the second position in advance before the start of the operation, and the flow path switching valve unit 50 stands by in the flow path of the heating operation. Thus, the time until the start of the heating operation can be shortened.

The energization to the first pilot valve unit 60a and the second pilot valve unit 60b is desirably stopped after the processing of "not energizing the first pilot valve unit 60a, but energizing the second pilot valve unit 60b". This is because even if the energization is stopped, the position of the valve body 52 is maintained at the second position, and accordingly, wasteful power consumption is suppressed.

As a supplementary matter regarding the stop position control of the valve body 52, step S2 in FIG. 6 may be executed after the processing of steps S4 and S6.

In this case, in step S3, it is not determined whether the operation is stopped in the heating operation, but it is determined whether the operation at the time of the receipt of the operation stop command in step S1 is the heating operation.

Similarly, in step S5, it is not determined whether the operation is stopped in the defrost operation, but it is determined whether the operation at the time of the receipt of the operation stop command in step S1 is the defrost operation.

### (6) Modifications

In the above embodiment, the first pilot valve unit 60a is open when energized and closed when not energized, and the second pilot valve unit 60b is also open when energized and closed when not energized. However, the present invention is not limited to this configuration, and the first pilot valve unit 60a may be configured to be closed when energized and open when not energized, and the second pilot valve unit 60b may also be configured to be closed when energized and open when not energized.

### (7) Characteristics

(7-1)
In the air conditioner 100, in a case where the refrigeration cycle operation immediately before being stopped is the heating operation or the defrost operation in which the refrigerant in the refrigerant circuit circulates in the same direction as in the cooling operation, the position of the valve body 52 after the operation stop is maintained at the second position or moved to the second position. As a result, the time from the operation stop state to the start of the heating operation can be shortened.

(7-2)
In the air conditioner 100, when the valve body 52 is at the second position, the first pilot valve unit 60a is in the closed state and the second pilot valve unit 60b is in the open state, or the first pilot valve unit 60a and the second pilot valve unit 60b are both in the closed state. Since the position of the valve body 52 is maintained or the valve body 52 is moved by a combination of opening and closing of the first pilot valve unit 60a and opening and closing of the second pilot valve unit 60b, the control is easy.

(7-3)
In the air conditioner 100, since open and closed states of the first pilot valve unit 60a and the second pilot valve unit 60b can be switched by non-energization or energization, the valve body can be operated more quickly than a motor-driven valve.

(7-4)
In the air conditioner 100, bringing the first pilot valve unit 60a and the second pilot valve unit 60b into the closed state after the valve body 52 moves means bringing the first pilot valve unit 60a and the second pilot valve unit 60b into the non-energized state, and power consumption is suppressed.

(7-5)
In the air conditioner 100, when the operation upon issuance of the stop command of the refrigeration cycle operation is the heating operation and the valve body 52 is at the third position between the first position and the second position, the control unit 90 moves the valve body 52 to the second position. As a result, the time from the operation stop state to the start of the heating operation can be shortened.

(7-6)
In the air conditioner 100, when setting the position of the valve body 52 to the second position, the control unit 90 brings the first pilot valve unit 60a into the closed state and brings the second pilot valve unit 60b into the open state. Since the valve body 52 is moved by the combination of opening and closing of the first pilot valve unit 60a and opening and closing of the second pilot valve unit 60b, the control is easy.

(7-7)
In the air conditioner 100, in a case where the position of the valve body 52 upon issuance of the stop command of the refrigeration cycle operation is the second position and the second pilot valve unit 60b is in the open state, the control unit 90 brings the second pilot valve unit 60b into the closed state. Bringing the second pilot valve unit 60b into the closed state means bringing the second pilot valve unit 60b into the non-energized state, and the first pilot valve unit 60a and the second pilot valve unit 60b are in the non-energized state, and accordingly, power consumption is suppressed.

(7-8)
When the first pilot valve unit 60a is in the open state and the second pilot valve unit 60b is in the closed state, the first pilot chamber 55a of the four-way switching valve 12 communicates with the second flow path Pb, is reduced in size, moves the valve body 52 to the first position. When the first pilot valve unit 60a is in the closed state and the second pilot valve unit 60b is in the open state, the second pilot chamber 55b of the four-way switching valve 12 communicates with the second flow path Pb, is reduced in size, and moves the valve body 52 to the second position.

### (8) Other embodiments

In a case where the air conditioner 100 is a pair unit in which one indoor unit 20 is connected to one outdoor unit 10, the stop position control of the valve body 52 is not limited to the time of the operation stop due to the power source being turned off.

For example, the stop position control of the valve body 52 is also performed when a so-called thermo-off state is achieved in which a difference between an indoor set temperature and an indoor temperature falls within a predetermined range and the compressor 11 is stopped.

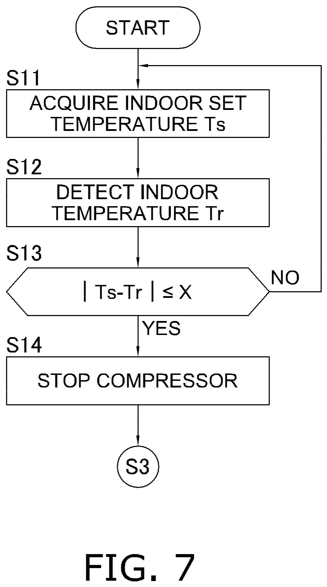

FIG. 7 is a flowchart of thermo-off control. Here, as an example, the stop position control of the valve body 52 according to another embodiment will be described with reference to FIG. 7.

### (Step S11)

In step S11, the control unit 90 acquires an indoor set temperature Ts as a set temperature in the room that is an air conditioning target space. The indoor set temperature Ts is set by the user via the remote control unit 93.

### (Step S12)

In step S12, the control unit 90 detects an indoor temperature Tr via an indoor temperature sensor 95. The indoor temperature sensor 95 is disposed in the indoor unit 20.

### (Step S13)

In step S13, the control unit 90 determines whether an absolute value of a difference between the indoor set temperature Ts and the indoor temperature Tr is less than or equal to a predetermined value X. When determining that the absolute value of the difference between the indoor set temperature Ts and the indoor temperature Tr is less than or equal to the predetermined value X, the control unit 90 proceeds to step S14. On the other hand, when determining that the absolute value of the difference between the indoor set temperature Ts and the indoor temperature Tr is not less than or equal to the predetermined value X, the control unit 90 returns to step S11.

### (Step S14)

In step S14, the control unit 90 stops the compressor 11, and proceeds to step S3 shown in FIG. 6.

### (Step S3)

In step S3, the control unit 90 determines whether the air conditioner 100 has stopped in the heating operation. When determining that the air conditioner 100 has stopped in the heating operation, the control unit 90 proceeds to step S4. When determining that the air conditioner 100 has stopped not in the heating operation, the control unit 90 proceeds to step S5.

### (Step S4)

In step S4, the control unit 90 maintains the valve body 52 of the four-way switching valve 12 at the second position. In order to maintain the valve body 52 at the second position, specifically, the first pilot valve unit 60a is closed, the second pilot valve unit 60b is opened, or the first pilot valve unit 60a and the second pilot valve unit 60b are both closed. As a result, the valve body 52 is set and maintained at the second position.

### (Step S5)

In step S5, the control unit 90 determines whether the air conditioner 100 has stopped in the defrost operation. When determining that the air conditioner 100 has stopped in the defrost operation, the control unit 90 proceeds to step S6. When determining that the air conditioner 100 has not stopped in the defrost operation, the control unit 90 ends the control.

### (Step S6)

In step S6, the control unit 90 moves the valve body 52 of the four-way switching valve 12 to the second position. In order to move the position of the valve body 52 to the second position, specifically, the first pilot valve unit 60a is closed, and the second pilot valve unit 60b is opened. As a result, the valve body 52 moves to the second position.

The operation started from the thermo-off state in the heating operation is the heating operation. Therefore, the valve body 52 is set to the second position in advance before the start of the operation, and the flow path switching valve unit 50 stands by in the flow path of the heating operation. Thus, the time until the start of the heating operation can be shortened.

After the valve body 52 is set to the second position, the first pilot valve unit 60a and the second pilot valve unit 60b are desirably in the closed state. This is because bringing the first pilot valve unit 60a and the second pilot valve unit 60b into the closed state after the valve body 52 moves means bringing the first pilot valve unit 60a and the second pilot valve unit 60b into the non-energized state, and power consumption is suppressed.

The embodiments of the present disclosure have been described above. It will be understood that various modifications to modes and details should be available without departing from the gist and the scope of the present disclosure recited in the claims.

### REFERENCE SIGNS LIST

11: compressor
12: four-way switching valve
13: outdoor heat exchanger (first heat exchanger)
15: expansion valve
23: indoor heat exchanger (second heat exchanger)
30: refrigerant circuit
50: flow path switching valve unit
52: valve body
55a: first pilot chamber
55b: second pilot chamber
60: pilot valve unit
60a: first pilot valve unit
60b: second pilot valve unit
90: control unit
100: air conditioner (refrigeration apparatus)
Pa: first flow path (high-pressure refrigerant inflow portion)
Pb: second flow path (low-pressure refrigerant inflow portion)
Pc: third flow path
Pd: fourth flow path

### CITATION LIST

### PATENT LITERATURE

Patent Literature 1: JP S55-53825 Y

## Claims

1. A refrigeration apparatus (100) in which a refrigerant circulates in a refrigerant circuit (30) including a compressor (11), a four-way switching valve (12), a first heat exchanger (13), an expansion valve (15), and a second heat exchanger (23), and a refrigeration cycle operation is performed, wherein
the four-way switching valve (12) includes
a flow path switching valve unit (50) including a valve body (52) movable between a first position and a second position different from the first position, and
a pilot valve unit (60) that moves the valve body (52),
when the valve body (52) is at the first position, the refrigeration cycle operation becomes a cooling operation in which the refrigerant discharged from the compressor (11) is sent to the first heat exchanger (13) through the four-way switching valve (12),
when the valve body (52) is at the second position, the refrigeration cycle operation becomes a heating operation in which the refrigerant discharged from the compressor (11) is sent to the second heat exchanger (23) through the four-way switching valve (12), and
in a case where the refrigeration cycle operation immediately before being stopped is the heating operation or a defrost operation in which the refrigerant in the refrigerant circuit (30) circulates in a same direction as in the cooling operation, a position of the valve body (52) after an operation stop is maintained at the second position or moved to the second position.

2. The refrigeration apparatus (100) according to claim 1, wherein
the pilot valve unit (60) includes
a first pilot valve unit (60a), and
a second pilot valve unit (60b), and
when the valve body (52) is at the second position,
the first pilot valve unit (60a) is in a closed state and the second pilot valve unit (60b) is in an open state, or
the first pilot valve unit (60a) and the second pilot valve unit (60b) are both in the closed state.

3. The refrigeration apparatus (100) according to claim 2, wherein
each of the first pilot valve unit (60a) and the second pilot valve unit (60b) is an electromagnetic on-off valve, and switches an on-off state of the on-off valve by switching an energized state.

4. The refrigeration apparatus (100) according to claim 3, further comprising
a control unit (90) that controls the four-way switching valve (12), wherein
each of the first pilot valve unit (60a) and the second pilot valve unit (60b) is in the closed state when not energized and in the open state when energized, and
the control unit (90) closes the first pilot valve unit (60a) and the second pilot valve unit (60b) while maintaining the position of the valve body (52) at the second position in a case where an operation upon issuance of the stop command of the refrigeration cycle operation is the heating operation.

5. The refrigeration apparatus (100) according to claim 4, wherein
the control unit (90) moves the valve body (52) to the second position when the operation upon issuance of the stop command of the refrigeration cycle operation is the heating operation and the valve body (52) is at a third position between the first position and the second position.

6. A refrigeration apparatus (100) according to claim 4 or 5, wherein
the control unit (90) brings the first pilot valve unit (60a) to the closed state and brings the second pilot valve unit (60b) to the open state when setting the position of the valve body (52) to the second position.

7. The refrigeration apparatus (100) according to claim 4, wherein
the control unit (90) brings the second pilot valve unit (60b) to the closed state when the position of the valve body (52) upon issuance of the stop command of the refrigeration cycle operation is the second position and the second pilot valve unit (60b) is in the open state.

8. The refrigeration apparatus (100) according to claim 4, wherein
the control unit (90) brings the first pilot valve unit (60a) and the second pilot valve unit (60b) to the closed state when a difference between a temperature of a heating target space and a set temperature falls within a predetermined range during the heating operation and the control unit (90) stops the compressor (11).

9. The refrigeration apparatus (100) according to any one of claims 2 to 8, wherein
the flow path switching valve unit (50) further includes
a high-pressure refrigerant inflow portion (Pa) that introduces a high-pressure refrigerant from a high-pressure side of the compressor (11),
a low-pressure refrigerant outflow portion (Pb) that guides an inflowing low-pressure refrigerant toward a low-pressure side of the compressor (11),
a first pilot chamber (55a) that communicates with the first pilot valve unit (60a), and
a second pilot chamber (55b) that communicates with the second pilot valve unit (60b), wherein
when the first pilot valve unit (60a) is in the open state and the second pilot valve unit (60b) is in the closed state, the first pilot chamber (55a) communicates with the low-pressure refrigerant outflow portion (Pb), is reduced in size, and moves the valve body (52) to the first position, and
when the first pilot valve unit (60a) is in the closed state and the second pilot valve unit (60b) is in the open state, the second pilot chamber (55b) communicates with the low-pressure refrigerant outflow portion (Pb), is reduced in size, and moves the valve body (52) to the second position.
